# EUROPÄISCHE PATENTSCHRIFT

(11) **EP 3 700 709 B1**
(45) Veröffentlichungstag und Bekanntmachung des Hinweises auf die Patenterteilung: **17.05.2023**
(21) Anmeldenummer: 18803857.4
(22) Anmeldetag: 22.10.2018
(51) Int. Cl.: B23Q 1/00, B23Q 17/22

(54) **MESSSYSTEM ZUR ÜBERWACHUNG EINER SPINDEL**
MEASURING SYSTEM FOR MONITORING A SPINDLE
SYSTÈME DE MESURE SERVANT À LA SURVEILLANCE D'UNE BROCHE

(30) Priorität: 23.10.2017 DE 102017124667
(43) Veröffentlichungstag der Anmeldung: 02.09.2020
(73) Patentinhaber: Schaeffler Technologies AG & Co. KG, 91074 Herzogenaurach (DE)
(72) Erfinder: SEYBOLD, Alexander, 96120 Bischberg (DE); WEGNER, Christoph, 97520 Gochsheim (DE); GLÜCK, Stefan, 97424 Schweinfurt (DE); VOLL, Martin, 97437 Haßfurt (DE); SCHIFFLER, Andreas, 96472 Rödental (DE)
(86) Internationale Anmeldenummer: PCT/DE2018/100861
(87) Internationale Veröffentlichungsnummer: WO 2019/080965

(56) Entgegenhaltungen:
- EP-A1- 1 764 186
- EP-A1- 2 759 369
- DE-A1- 10 351 347

## Beschreibung

Die vorliegende Erfindung betrifft ein Messsystem zur Überwachung einer Spindel gemäß dem Oberbegriff des beigefügten Anspruchs 1.

Die DE 103 48 608 B4 zeigt ein Überwachungssystem für eine Spindelvorrichtung, welches einen ersten Sensor zur Detektion einer Drehzahl der Spindelvorrichtung und einen zweiten Sensor zur Detektion einer Temperatur der Spindelvorrichtung umfasst. Das Überwachungssystem beinhaltet weiterhin eine Klassifikatoreinrichtung mit der auf Basis der Sensordaten der Zustand der Spindelvorrichtung klassifiziert wird. Eine Auswerteeinrichtung dient zum Prognostizieren eines Instandhaltungsbedarfs der Spindelvorrichtung mittels eines Modells auf Basis der Sensordaten sowie vorbestimmter Grenzwerte und des klassifizierten Zustandes.

Die EP 1 425 640 B1 beschreibt ein Überwachungssystem zur prozessbegleitenden Überwachung von Werkzeugen, Werkstücken oder Bearbeitungsprozessen in spanabhebenden Werkzeugmaschinen. Das System umfasst mindestens einen Sensor zur Erfassung von Messsignalen aus dem Bearbeitungsprozess, die mindestens einer Kraftrichtung, einer Kraftresultierenden, einem Druck, einem Drehmoment, einer Motorleistung, einem Motorstrom, einer Schwingung, einer Beschleunigung, einem Körperschallgeräusch oder einer Abstandsänderung zwischen zwei Maschinenteilen gleichzusetzen sind. Ein weiterer Bestandteil des Systems ist eine Überwachungshardware mit Software zur Speicherung und zum Vergleich von Überwachungsdaten in Werkzeug- oder schnittspezifischen Überwachungsabschnitten. Bei Messsignalen, die vorgegebene Überwachungsschwellen verletzen, werden entsprechende Aktionen ausgelöst. Eine Bedienungshardware mit Software dient zur Bedienung bzw. Parametrierung des Überwachungssystems bzw. zur Visualisierung der Messsignale.

Von der Firma FAG Kugelfischer Georg Schäfer AG ist das sogenannte *Spindel Condition Monitoring-System (SpiCoM)* für Werkzeugmaschinenspindeln bekannt. Hauptbestandteil von *SpiCoM* ist ein in die Spindel integrierbarer Messring, der die Relativverlagerungen und Verkippungen in allen Raumrichtungen zwischen Welle und Gehäuse berührungslos misst. Der Messring umfasst einen mit der Spindel mechanisch verbundenen Innenring und einen am Spindelgehäuse befestigten äußeren Sensorring. In den Sensorring sind drei radiale und drei axiale, jeweils um 120° zueinander versetzte Wirbelstromsensoren integriert. Der Innenring besteht aus einem Targetring mit axialen und radialen Messflächen, der auf einem Stahl-Trägerring aufgebracht ist.

Die EP 2 759 369 A1 offenbart ein Messsystem, auf der der Oberbegriff des Anspruchs 1 basiert.

Die Aufgabe der vorliegenden Erfindung besteht darin, ausgehend von dem bekannten *SpiCoM*-System ein optimiertes Messsystem zur Überwachung von Spindeln zur Verfügung zu stellen, welches auf unterschiedliche Spindeldurchmesser übertragbar ist, aufwandsarm in Spindeln von Werkzeugmaschinen integrierbar ist und stets eine hinreichende Messgenauigkeit erreicht.

Zur Lösung der erfindungsgemäßen Aufgabe dient ein Messsystem gemäß dem beigefügten Anspruch 1.

Das erfindungsgemäße Messsystem dient zur Überwachung einer Spindel. Es umfasst zunächst ein zylinderförmiges Gehäuse, welches in einem Spindelgehäuse positionierbar und mit diesem mechanisch fest verbindbar ist. Innerhalb des Gehäuses ist ein Trägerring angeordnet, welcher mit dem Gehäuse mechanisch fest verbunden ist. Das Messsystem beinhaltet weiterhin drei erste Sensoren zum Messen einer radialen Verlagerung der Spindel und drei zweite Sensoren zum Messen einer axialen Verlagerung der Spindel. Die ersten und zweiten Sensoren sind über dem Umfang des Trägerrings verteilt angeordnet. Erfindungswesentlich ist, dass die Sensoren mit dem Trägerring vergossen sind.

Ein wesentlicher Vorteil des erfindungsgemäßen Messsystems ist, dass durch Vergießen der Sensoren mit dem Trägerring, die Sensoren optimal vor Umgebungseinflüssen, wie Feuchtigkeit, extremen Temperaturunterschieden, mechanischen und chemischen Einflüssen, geschützt sind. Die auf dem Trägerring entsprechend positionierten Sensoren werden durch den Verguss in ihrer Lage fixiert, wodurch geringe Positionierungstoleranzen erreichbar sind. Die Sensoren befinden sich somit stets in einer optimalen Position, wodurch eine hinreichende Messgenauigkeit, von vorzugsweise 1 µm, gewährleistet ist. Zur Anpassung an unterschiedliche Spindeldurchmesser können Gehäuse und Trägerringe mit unterschiedlichen Durchmessern vorgehalten werden, die mit den Sensoren entsprechend kombinierbar sind.

Das Messsystem umfasst vorzugsweise mindestens ein Elektronikmodul für den Daten- und Energieaustausch mit den Sensoren. Das mindestens eine Elektronikmodul ist ebenfalls mit dem Trägerring vergossen und somit vor Umwelteinflüssen sicher geschützt. Das Elektronikmodul steht vorzugsweise mit einer externen Datenverarbeitungseinheit in Verbindung. Bei Ausführungen, welche mehrere Elektronikmodule nutzen, hat es sich als vorteilhaft erwiesen, die Elektronikmodule über dem Umfang des Trägerrings verteilt anzuordnen. Die Elektronikmodule sind vorzugsweise über flexible Leiterplatten miteinander verbunden.

Die Sensoren sind bevorzugt als Wirbelstromsensoren ausgebildet. In diesem Zusammenhang ist es zweckmäßig, das Messsystem weiterhin mit einem ersten Messring mit axialen Messflächen und einem zweiten Messring mit radialen Messflächen auszustatten. Die beiden Messringe sind mit der Spindel mechanisch fest verbindbar. Außerdem sind die Messringe derart dimensioniert, dass sie innerhalb des Trägerrings anordenbar sind und die Messflächen von den Sensoren erfassbar sind. Die Messringe sind vorzugsweise miteinander mechanisch fest verbunden, so dass sie als Baueinheit aufwandsarm an der Spindel befestigt werden können. Alternativ können die Messringe auch einteilig als ein Bauteil ausgeführt sein.

Das Gehäuse weist vorzugsweise eine Aussparung zum Durchführen eines Anschlusskabels auf. Die Aussparung ist so ausgebildet, dass das Anschlusskabel radial oder axial durchführbar ist.

Das Gehäuse besteht bevorzugt aus Metall. Das Anschlusskabel ist vorzugweise innerhalb des Gehäuses über eine elektrisch leitfähige Dichtung mit dem Gehäuse elektrisch leitend verbunden. Die elektrisch leitfähige Dichtung kann beispielsweise als Textildichtung oder Elastomerdichtung ausgebildet sind.

Gemäß einer vorteilhaften Ausführungsform sind jeweils ein erster Sensor und ein zweiter Sensor paarweise angeordnet. Die Sensorpaare sind hierbei vorzugsweise um 120° versetzt zueinander angeordnet.

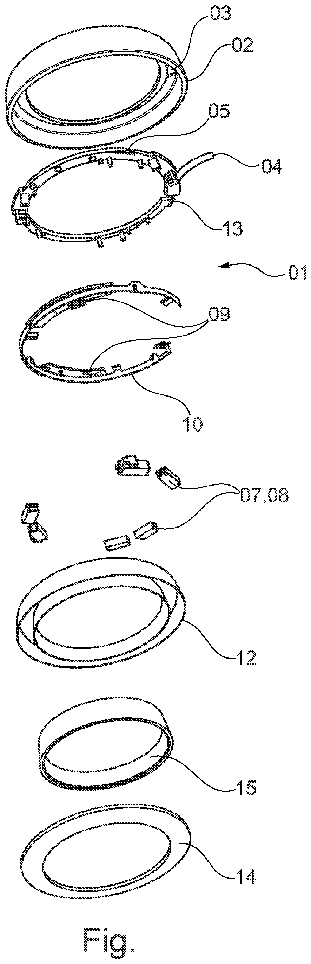

Eine bevorzugte Ausführungsform der Erfindung wird nachfolgend anhand der beigefügten einzigen Figur näher erläutert. Die Figur zeigt eine Explosivdarstellung des erfindungsgemäßen Messsystems.

Ein erfindungsgemäßes Messsystem 01 dient zur Überwachung einer Spindel einer Werkzeugmaschine. Es umfasst zunächst ein zylinderförmiges Gehäuse 02, welches bevorzugt aus Metall besteht. Das Gehäuse 02 eignet sich zur Anordnung innerhalb eines Spindelgehäuses. Es kann mit diesem mechanisch fest verbunden werden. In das Gehäuse 02 ist eine Aussparung 03 eingebracht. Durch die Aussparung 03 kann ein Anschlusskabel 04 radial oder axial durchgeführt werden.

Innerhalb des Gehäuses 02 befindet sich nach dem Zusammenbau ein Trägerring 05, welcher vorzugsweise aus Kunststoff besteht. Der Trägerring 05 ist mit dem Gehäuse 02 mechanisch fest verbunden. Über dem Umfang des Trägerrings 05 sind drei erste Sensoren 07 und drei zweite Sensoren 08 verteilt angeordnet. Zwischen dem Trägerring 05 und den Sensoren 07, 08 besteht eine mechanisch feste Verbindung. Die ersten Sensoren 07 dienen zum Messen einer radialen Verlagerung der Spindel, während die zweiten Sensoren 08 zum Messen einer axialen Verlagerung der Spindel ausgebildet sind. Die Sensoren 07, 08 sind bevorzugt als Wirbelstromsensoren und/oder Schwingungssensoren und/oder Drehzahlerkennungssensoren ausgebildet. Vorzugsweise sind jeweils ein erster Sensor 07 und ein zweiter Sensor 08 paarweise zusammengefasst. Die Sensorpaare sind um etwa 120° zueinander versetzt angeordnet.

Für den Daten- und Energieaustausch der Sensoren 07, 08 ist das Messsystem 01 mit Elektronikmodulen 09 ausgestattet. Die Elektronikmodule 09 sind mittels flexibler Leiterplatten 10 miteinander verbunden. Sie stehen vorzugsweise mit einer externen Datenverarbeitungseinheit (nicht dargestellt) in Verbindung.

Die Sensoren 07, 08 und die Elektronikmodule 10 werden über einen Verguss 12 mit dem Trägerring 05 dauerhaft und zueinander ausgerichtet verbunden.

Das Anschlusskabel 04 ist über eine elektrisch leitfähige Dichtung 13 mit dem Gehäuse 02 elektrisch leitend verbunden. Die elektrisch leitfähige Dichtung 13 ist vorzugsweise als Textildichtung oder Elastomerdichtung ausgeführt.

Das Messsystem 01 umfasst weiterhin einen ersten Messring 14 mit axialen Messflächen und einen zweiten Messring 15 mit radialen Messflächen. Die Messringe 14, 15 können mit der Spindel fest verbunden werden. Sie sind derart dimensioniert, dass sie innerhalb des Trägerrings anordnenbar sind und ihre Messflächen von den Sensoren 07, 08 erfasst werden, d. h. in deren Erfassungsbereich positioniert sind. Erster und zweiter Messring 14, 15 sind vorzugsweise mechanisch fest miteinander verbunden oder auch als ein gemeinsames Bauteil ausgebildet.

Nachdem das Messsystem 01 an der Spindel angebracht ist, können Relativverlagerungen und Verkippungen zwischen Spindel und Spindelgehäuse in allen drei Raumrichtungen berührungslos erfasst werden.

### Bezugszeichenliste

- 01: Messsystem
- 02: Gehäuse
- 03: Aussparung
- 04: Anschlusskabel
- 05: Trägerring
- 06: -
- 07: erste Sensoren
- 08: zweite Sensoren
- 09: Elektronikmodule
- 10: flexible Leiterplatten
- 11: -
- 12: Verguss
- 13: leitfähige Dichtung
- 14: erster Messring
- 15: zweiter Messring

## Patentansprüche

1. Messsystem (01) zur Überwachung einer Spindel umfassend:
• ein zylinderförmiges Gehäuse (02), welches in einem Spindelgehäuse anordenbar und mit diesem mechanisch fest verbindbar ist,
• einen innerhalb des Gehäuses (02) angeordneten und mit dem Gehäuse (02) mechanisch fest verbundenen Trägerring (05),
• drei erste Sensoren (07) zum Messen einer radialen Verlagerung der Spindel und drei zweite Sensoren (08) zum Messen einer axialen Verlagerung der Spindel, wobei die ersten und die zweiten Sensoren (07, 08) über dem Umfang des Trägerrings (05) verteilt angeordnet sind und mit dem Trägerring (05) mechanisch fest verbunden sind,
**dadurch gekennzeichnet, dass**
die Sensoren (07,08) mit dem Trägerring (05) vergossen sind und Wirbelstromsensoren und/oder Schwingungssensoren und/oder Drehzahlerkennungssensoren sind,
und dass
das Messsystem weiterhin einen ersten Messring (14) mit axialen Messflächen und einen zweiten Messring (15) mit radialen Messflächen aufweist,
wobei die Messringe (14, 15) mit der Spindel mechanisch fest verbindbar sind, und derart dimensioniert sind, dass sie innerhalb des Trägerrings (05) anordenbar sind und die Messflächen von den Sensoren (07, 08) erfassbar sind.

2. Messsystem (01) nach Anspruch 1, **dadurch gekennzeichnet, dass** es weiterhin mindestens ein Elektronikmodul (09) für den Daten- und Energieaustausch mit den Sensoren (07, 08) aufweist, wobei das Elektronikmodul (09) mit dem Trägerring (05) vergossen ist.

3. Messsystem (01) nach Anspruch 2, **dadurch gekennzeichnet, dass** es mehrere Elektronikmodule (09) aufweist, wobei die Elektronikmodule (09) über flexible Leiterplatten (10) miteinander verbunden sind.

4. Messsystem (01) nach Anspruch 3, **dadurch gekennzeichnet, dass** die Messringe (14, 15) miteinander mechanisch fest verbunden oder einstückig ausgebildet sind.

5. Messsystem (01) nach einem der Ansprüche 1 bis 4, **dadurch gekennzeichnet, dass** das Gehäuse (02) eine Aussparung (03) zum Durchführen eines Anschlusskabels (04) aufweist.

6. Messsystem (01) nach einem der Ansprüche 1 bis 5, **dadurch gekennzeichnet, dass** das Gehäuse (02) aus Metall besteht.

7. Messsystem (01) nach Anspruch 6, **dadurch gekennzeichnet, dass** das Anschlusskabel (04) innerhalb des Gehäuses (02) über eine elektrisch leitfähige Dichtung (13) mit dem Gehäuse (02) elektrisch leitend verbunden ist.

8. Messsystem (01) nach einem der Ansprüche 1 bis 7, **dadurch gekennzeichnet, dass** jeweils ein erster Sensor (07) und ein zweiter Sensor (08) paarweise zusammengefasst und angeordnet sind, wobei die Sensorpaare um 120° versetzt zueinander angeordnet sind.

## Claims

1. A measuring system (01) for monitoring a spindle, comprising:
• a cylindrical housing (02), which can be arranged in a spindle housing and can be mechanically connected thereto in a fixed manner,
• a carrier ring (05) arranged inside the housing (02) and mechanically connected to the housing (02) in a fixed manner,
• three first sensors (07) for measuring a radial displacement of the spindle and three second sensors (08) for measuring an axial displacement of the spindle, wherein the first and second sensors (07, 08) are arranged distributed over the circumference of the carrier ring (05) and mechanically connected to the carrier ring (05) in a fixed manner,
**characterised in that**
the sensors (07, 08) are cast with the carrier ring (05) and are eddy current sensors and/or vibration sensors and/or speed detection sensors, and **in that**
the measuring system further has a first measuring ring (14) having axial measuring surfaces and a second measuring ring (15) having radial measuring surfaces,
wherein the measuring rings (14, 15) can be mechanically connected to the spindle in a fixed manner, and are dimensioned such that they can be arranged inside the carrier ring (05) and the measuring surfaces can be sensed by the sensors (07, 08).

2. The measuring system (01) according to claim 1, **characterised in that** it further has at least one electronic module (09) for the exchange of data and energy with the sensors (07, 08), wherein the electronic module (09) is cast with the carrier ring (05).

3. The measuring system (01) according to claim 2, **characterised in that** it has a plurality of electronic modules (09), wherein the electronic modules (09) are connected to one another via flexible printed circuit boards (10).

4. The measuring system (01) according to claim 3, **characterised in that** the measuring rings (14, 15) are mechanically connected to one another in a fixed manner or formed as a single piece.

5. The measuring system (01) according to any one of claims 1 to 4, **characterised in that** the housing (02) has an opening (03) for feedthrough of a connection cable (04).

6. The measuring system (01) according to any one of claims 1 to 5, **characterised in that** the housing (02) consists of metal.

7. The measuring system (01) according to claim 6, **characterised in that** the connection cable (04) is connected to the housing (02) in an electrically conductive manner inside the housing (02) via an electrically conductive seal (13).

8. The measuring system (01) according to any one of claims 1 to 7, **characterised in that** a first sensor (07) and a second sensor (08) are in each case combined and arranged in pairs, wherein the sensor pairs are arranged offset 120° in relation to one another.

## Revendications

1. Système de mesure (01) servant à la surveillance d'une broche comprenant :
• un boîtier cylindrique (02) qui peut être agencé dans un boîtier de broche et peut être relié de manière mécaniquement fixe à celui-ci,
• une bague de support (05) agencée à l'intérieur du boîtier (02) et reliée de manière mécaniquement fixe au boîtier (02),
• trois premiers capteurs (07) pour mesurer un déplacement radial de la broche et trois seconds capteurs (08) pour mesurer un déplacement axial de la broche, les premiers et les seconds capteurs (07, 08) étant agencés répartis sur la périphérie de la bague de support (05) et étant reliés de manière mécaniquement fixe à la bague de support (05),
**caractérisé en ce que**
les capteurs (07, 08) sont coulés avec la bague de support (05) et sont des capteurs à courant de Foucault et/ou des capteurs de vibrations et/ou des capteurs de détection de vitesse de rotation et **en ce que**
le système de mesure comporte en outre une première bague de mesure (14) avec des surfaces de mesure axiales et une seconde bague de mesure (15) avec des surfaces de mesure radiales,
les bagues de mesure (14, 15) pouvant être reliées de manière mécaniquement fixe à la broche et dimensionnées de façon à pouvoir être agencées à l'intérieur de la bague de support (05) et à ce que les surfaces de mesure puissent être détectées par les capteurs (07, 08).

2. Système de mesure (01) selon la revendication 1, **caractérisé en ce qu'**il comporte en outre au moins un module électronique (09) pour l'échange de données et d'énergie avec les capteurs (07, 08), le module électronique (09) étant coulé avec la bague de support (05).

3. Système de mesure (01) selon la revendication 2, **caractérisé en ce qu'**il comporte plusieurs modules électroniques (09), les modules électroniques (09) étant reliés les uns aux autres par l'intermédiaire de circuits imprimés flexibles (10).

4. Système de mesure (01) selon la revendication 3, **caractérisé en ce que** les bagues de mesure (14, 15) sont reliées de manière mécaniquement fixe les unes aux autres ou sont réalisées d'un seul tenant.

5. Système de mesure (01) selon l'une quelconque des revendications 1 à 4, **caractérisé en ce que** le boîtier (02) comporte un évidement (03) pour le passage d'un câble de raccordement (04).

6. Système de mesure (01) selon l'une quelconque des revendications 1 à 5, **caractérisé en ce que** le boîtier (02) est en métal.

7. Système de mesure (01) selon la revendication 6, **caractérisé en ce que** le câble de raccordement (04) à l'intérieur du boîtier (02) est relié de manière électroconductrice au boîtier (02) par l'intermédiaire d'un joint électroconducteur (13).

8. Système de mesure (01) selon l'une quelconque des revendications 1 à 7, **caractérisé en ce qu'**un premier capteur (07) et un second capteur (08) sont respectivement réunis et agencés par paires, les paires de capteurs étant décalées de 120° les unes par rapport aux autres.
